# EUROPÄISCHE PATENTSCHRIFT

(11) **EP 2 029 916 B1**
(45) Veröffentlichungstag und Bekanntmachung des Hinweises auf die Patenterteilung: **24.03.2010**
(21) Anmeldenummer: 07764557.0
(22) Anmeldetag: 31.05.2007
(51) Int. Cl.: F16H 61/02, F16H 61/10

(54) **VERFAHREN ZUR REALISIERUNG DER SCHALTUNGEN EINES AUTOMATISCHEN SCHALTGETRIEBES EINES KRAFTFAHRZEUGES, INSBESONDERE EINER BREMSRÜCKSCHALTUNG**
METHOD FOR IMPLEMENTING THE GEAR CHANGES OF AN AUTOMATIC TRANSMISSION OF A VEHICLE, IN PARTICULAR A BRAKING DOWNSHIFT
PROCÉDÉ PERMETTANT DE RÉALISER LES CHANGEMENTS DE VITESSE D'UNE BOÎTE DE VITESSES AUTOMATIQUE D'UN VÉHICULE AUTOMOBILE, EN PARTICULIER UNE RÉTROGRADATION EN FREINAGE

(30) Priorität: 08.06.2006 DE 102006027037
(43) Veröffentlichungstag der Anmeldung: 04.03.2009
(73) Patentinhaber: Volkswagen Aktiengesellschaft, 38436 Wolfsburg (DE)
(72) Erfinder: SCHAEFER, Stephan, 38458 Wahrstedt (DE)
(86) Internationale Anmeldenummer: PCT/EP2007/004814
(87) Internationale Veröffentlichungsnummer: WO 2007/140923

(56) Entgegenhaltungen:
- DE-A1- 4 323 316
- DE-A1- 4 446 111
- DE-A1- 10 016 373
- US-A- 4 829 435
- US-A- 5 016 495

## Beschreibung

Die Erfindung betrifft ein Verfahren zur Realisierung der Schaltungen eines automatischen Schaltgetriebes eines Kraftfahrzeuges, insbesondere eines Doppelkupplungsgetriebes, wobei für jeden möglichen sequentiellen Gangwechsel in Abhängigkeit von der Fahrpedalstellung jeweils eine Hochschaltschwelle und/oder eine Rückschaltschwelle definiert ist, nämlich der für die jeweilige Hoch- bzw. Rückschaltung gültige Grenzwert als entsprechender Fahrzeuggeschwindigkeitswert in einem Steuergerät abgespeichert ist, wobei die während der Fahrt des Kraftfahrzeuges sich ändernde Fahrzeuggeschwindigkeit und die sich ändernde Fahrpedalstellung gemessen werden, wobei bei einer Bremsphase des Kraftfahrzeuges eine Rückschaltung, insbesondere eine Bremsrückschaltung realisiert wird.

Bei dem im Stand der Technik bisher bekannten Verfahren werden die Schaltungen in einem automatischen Schaltgetriebe, insbesondere Bremsrückschaltungen auf unterschiedliche Art und Weise durchgeführt. Vorab darf kurz folgendes erläutert werden:
Aufgrund von einem in einem Steuergerät abgespeicherten sogenannten "Schaltkennfeld" werden entsprechende Schaltungen in einem automatischen Schaltgetriebe realisiert. Hierbei weist das Schaltkennfeld mehrere sogenannte Kennlinien, nämlich insbesondere Hochschaltschwellen und Rückschaltschwellen auf. Unter dem Begriff Rückschaltschwellen (RS) werde im Allgemeinen die Kennlinien des Schaltkennfeldes bezeichnet, die eine Rückschaltung aus einem höheren Getriebegang in den nächst niedrigeren Getriebegang kennzeichnen. Mit dem Begriff "Hochschaltschwellen" (HS) werden im allgemeinen die Kennlinien bezeichnet, aufgrund derer die Hochschaltungen in einem Schaltgetriebe von einem niedrigen Getriebegang in einen nächst höheren Getriebegang realisiert werden. Es existieren also bspw. eine erste Hochschaltschwelle von dem ersten in den zweiten Gang (HS 1/2), eine zweite Hochschaltschwelle von dem zweiten in den dritten Gang (HS 2/3), eine dritte Hochschaltschwelle (HS 3/4) usw. in Abhängigkeit der jeweiligen Anzahl der Gangstufen des Schaltgetriebes. Weiterhin existiert zu jeder Hochschaltschwelle eine sogenannte Rückschaltschwelle, also bspw. eine erste Rückschaltschwelle von der zweiten in die erste Gangstufe (RS 2/1) sowie eine zweite Rückschaltschwelle von der dritten Gangstufe in die zweite Gangstufe (RS 3/2) usw., ebenfalls abhängig von der Anzahl der im Schaltgetriebe existierenden Gangstufen. Die Kennlinien, d.h. die Hochschalt- und Rückschaltschwellen für die einzelnen Gangwechsel sind darstellbar in einem Koordinatensystem, wobei auf der X-Achse die Fahrpedalstellung des Gaspedals und auf der Y-Achse die Fahrzeuggeschwindigkeit dargestellt ist. Anders ausgedrückt, jede Kennlinie sowohl für die Hochschaltschwellen als auch für Rückschaltschwellen wird durch einzelne spezifische Fahrzeuggeschwindigkeitswerte (Grenzwerte) für eine Hochschaltung bzw. für eine Rückschaltung gebildet bzw. sind bestimmten fahrzeugspezifischen Geschwindigkeitswerten entsprechende spezifische Fahrpedalstellungen zugeordnet und in dem Steuergerät abgespeichert. Die für eine spezifische Hochschaltung bzw. für eine spezifische Rückschaltung jeweiligen existierenden Werte, also die entsprechenden Grenzwerte, bilden entlang der Fahrpedalauslenkung von 0 bis 100 % dann eine bestimmte Hochschalt- oder Rückschaltschwelle. Zwischen den einzelnen Rückschaltschwellen und Hochschaltschwellen existieren also "dazwischen liegende Bereiche", in die die jeweils aktuell gemessene Fahrzeuggeschwindigkeit fallen kann.

Aufgrund der bei einer Getriebesteuerung zu realisierenden Schaltstrategien sind im Steuergerät des Schaltgetriebes die entsprechenden Hoch- und Rückschaltschwellen aller Gänge in Abhängigkeit der entsprechenden Fahrpedalstellung abgespeichert, d.h. aus einer Hochschaltschwelle bzw. einer Rückschaltschwelle ergibt sich für eine bestimmte Fahrpedalstellung eine bestimmte Fahrzeuggeschwindigkeit, bei der eine bestimmte Hochschaltung bzw. Rückschaltung erfolgt.

So sind im Stand der Technik unterschiedliche Verfahren zur Realisierung der Schaltungen eines automatischen Schaltgetriebes bekannt, nämlich insbesondere bei einem Bremsvorgang, bei dem dann sogenannte Bremsrückschaltungen realisiert werden. So offenbart die DE 36 26 100 A1, dass bei Betätigung der Motorbremse und gleichzeitiger Betätigung des Bremspedals Rückschaltungen über einen oder mehrere Gänge erfolgen bis der Motor mit einer maximal zulässigen Drehzahl läuft. Weiterhin offenbart die DE 100 16 373 A1 ein Verfahren zur Realisierung einer Bremsrückschaltung, bei dem die einem Schaltkennfeld im Wesentlichen zugrunde liegenden Kennlinien durch einen "Offset" angepasst werden. Schließlich offenbaren die DE 109 28 510 A1 bzw. die DE 41 20 603 A1 entsprechende Verfahren zur Realisierung einer Bremsrückschaltung, bei denen über die Berechnung von Drehzahlgradienten oder durch eine komplexe Adaption entsprechende Gradientenbereiche bzw. Adaptionskennlinien , berechnet werden, um die Rückschaltungen zu realisieren.

Allen bisher im Stand der Technik bekannten Verfahren ist gemeinsam, dass zur Realisierung der Rückschaltungen, den Rückschaltungen im Wesentlichen ein komplexes Adaptionsverfahren vorausgeht, was zu einem steuertechnischen hohen Aufwand führt. Insbesondere hat die Praxis gezeigt, dass bei dem bisher im Stand der Technik eingesetzten Verfahren sogenannte "Pendelschaltungen" auftreten können, so dass insbesondere nach der Bremsung, also in der Beschleunigungsphase des Kraftfahrzeugs dann sofort wieder eine Hochschaltung erfolgt, was den Fahrkomfort mindern kann.

Der Erfindung liegt daher die Aufgabe zugrunde, dass eingangs genannte Verfahren, von dem die Erfindung ausgeht, derart auszugestalten und weiterzubilden, dass der Fahrkomfort erhöht ist, insbesondere eine Bremsrückschaltung während des Bremsvorganges realisierbar ist, die einerseits einem möglichst hohen Fahrkomfort gewährleistet, andererseits einen großen Steueraufwand verhindert.

Die zuvor gezeigte Aufgabe ist nun dadurch gelöst, dass zunächst ein Bremsvorgang des Kraftfahrzeuges festgestellt wird, nämlich eine Betätigung des Bremspedals sensiert wird, dass eine Überprüfung erfolgt, ob das Fahrpedal unbetätigt ist, und dass für den Fall, dass das Bremspedals betätigt und das Fahrpedal unbetätigt ist die aktuelle Fahrzeuggeschwindigkeit ermittelt und mit dem jeweiligen tiefer liegenden Grenzwert der nächsten tiefer liegenden Hochschaltschwelle, nämlich mit dem Null-Fahrpedal-Grenzwert dieser Hochschaltschwelle verglichen wird, und dass dann, wenn dieser Null-Fahrpedal-Grenzwert oder ein bestimmter Differenzwert, der in Abhängigkeit dieses Null-Fahrpedal-Grenzwertes berechnet wird, unterschritten wird, dann der durch die damit unterschrittene Hochschaltschwelle definierte niedrigere Gang im Schaltgetriebe eingelegt wird.

Der Grundgedanke der Erfindung geht also dahin, eine in einem Schaltkennfeld bereits existierende Hochschaltschwelle, eben nicht als Hochschaltschwelle zu verwenden, sondern "virtuell" diese Hochschaltschwelle eben als Rückschaltschwelle einzusetzen. Dies gilt aber nicht für die gesamte Kennlinie, sondern eben nur für einzelne bestimmte Werte der entsprechenden Hochschaltschwellen, nämlich für die sogenannten "Null-Fahrpedal-Grenzwerte" oder für einen bestimmten sogenannten "Differenzwert", der in Abhängigkeit des entsprechenden Null-Fahrpedal-Grenzwertes berechnet wird. Unter dem Begriff "Null-Fahrpedal-Grenzwert" sind die entsprechenden Grenzwerte der jeweiligen Hochschaltschwellen gemeint, die bei einer Fahrpedalbetätigung von 0 %, also bei entsprechend unbetätigtem Fahrpedal durch das Kennfeld definiert sind, also quasi - einfach ausgedrückt- die entsprechenden Anfangswerte der jeweiligen Hochschaltschwellen. Durch das erfindungsgemäße Verfahren, nämlich dadurch, dass "virtuell" nunmehr eine Hochschaltschwelle für eine Rückschaltung verwendet wird, werden mehrere Vorteile erzielt. Zunächst wird dadurch erreicht, dass möglichst früh bei einem Bremsvorgang in den nächst niedrigeren Gang geschaltet wird, was den Fahrkomfort entscheidend erhöht. Weiterhin wird dann bei einem normalen sich anschließenden Beschleunigungsvorgang das Fahrpedal auch vom Fahrer des Kraftfahrzeuges entsprechend stark betätigt, so dass aufgrund der allgemein üblichen Ausbildung der Kennlinien bzw. der Hochschaltschwellen, die dann beim Beschleunigungsvorgang auch wieder als normale Hochschaltschwellen verwendet werden, eben nicht direkt wieder in den nächst höheren Gang geschaltet wird. Dies hat zur Folge hat, dass die eingangs erwähnten "Pendelschaltungen" vermieden werden können. Die eingangs genannten Nachteile sind daher vermieden und es werden die beschriebenen Vorteile erzielt, die mit niedrigeren Kosten und einem geringen Steuerungsaufwand realisiert werden können.

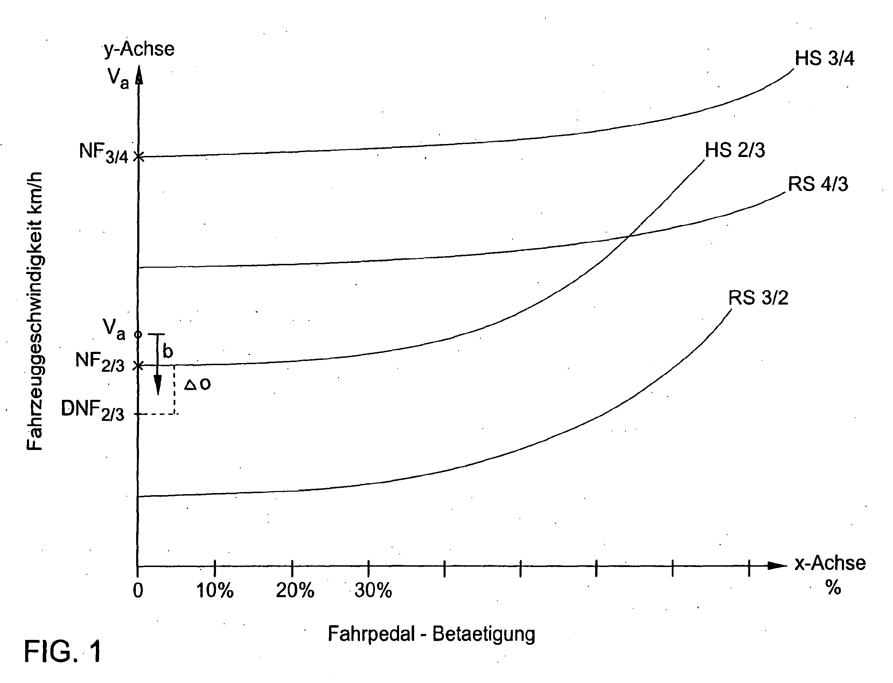

Es gibt nun eine Vielzahl von Möglichkeiten das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden darf das erfindungsgemäße Verfahren anhand der folgenden Zeichnung und der dazu gehörenden Beschreibung näher erläutert werden. In der Zeichnung zeigt
- Fig. 1: in vergrößerter und schematischer Darstellung einen Ausschnitte aus einem Schaltkennfeld zur Steuerung eines automatischen Schaltgetriebes mit teilweiser Darstellung bestimmter Hochschalt- bzw. Rückschaltschwellen.

Bevor auf die Fig. 1 und das erfindungsgemäße Verfahren im Einzelnen näher eingegangen wird, dürfen zuvor teilweise auch anhand der Fig. 1 Ausdrücke und/oder Bezeichnungen nochmals erläutert bzw. definiert werden.

In Fig. 1 ist auf der X-Achse die Fahrpedalstellung dargestellt und auf der Y-Achse die Fahrzeuggeschwindigkeit Vₐ. Gut ersichtlich dargestellt sind auch entsprechende Hochschaltschwellen HS bzw. Rückschaltschwellen RS für unterschiedliche Gänge des Schaltgetriebes, so ist bspw. die Hochschaltschwelle HS 2/3, also die Kennlinie für das Wechseln der Gänge vom zweiten in den dritten Gang und die Hochschaltschwelle 3/4, also die Kennlinie für das Wechseln vom dritten in den vierten Gang dargestellt. Weiterhin sind dargestellt die Rückschaltschwellen, nämlich die Rückschaltschwelle RS 3/2, also die Kennlinie für das Wechseln vom dritten in den zweiten Gang, und die Rückschaltschwelle 4/3, also die Kennlinie für das Wechseln vom vierten in den dritten Gang. Die übrigen Hochschaltschwellen und Rückschaltschwellen sind hier aus Gründen der Übersichtlichkeit in der Fig. 1 nicht dargestellt. Grundsätzlich enthält das entsprechende Schaltkennfeld selbstverständlich auch die übrigen Hochschaltschwellen bzw. Rückschaltschwellen für die entsprechenden sequentiellen Gangwechsel vzw. also alle Hochschaltschwellen HS und Rückschaltschwellen RS für die Gänge eins bis sechs. Ganz allgemein gilt, dass eine Schaltkennlinie a/b mit a < b als Hochschaltschwelle HS und mit a > b als Rückschaltschwelle dargestellt ist.

Für jede Hoch- bzw. Rückschaltung ist nun der entsprechend gültige Grenzwert als entsprechender Fahrzeuggeschwindigkeitswert in Abhängigkeit einer bestimmten Fahrpedalstellung abgespeichert. Aus den einzelnen gültigen Grenzwerten für eine bestimmte Hoch- bzw. Rückschaltung ergibt sich dann die entsprechende Kennlinie, also die in der Fig. 1 dargestellte Hochschaltschwelle HS bzw. Rückschaltschwelle RS. Vzw. ist für jeden möglichen sequentiellen Gangwechsel in Abhängigkeit von der Fahrpedalstellung nun jeweils eine Hochschaltschwelle HS und eine Rückschaltschwelle RS definiert, also die entsprechenden gültigen Grenzwerte sind in einem Steuergerät abgespeichert.

Während der Fahrt des Kraftfahrzeuges wird die sich ändernde Fahrzeuggeschwindigkeit Vₐ vzw. permanent gemessen bzw. ermittelt, dies geschieht vzw. über entsprechende Drehzahlsensoren bzw. Raddrehzahlen. Auch die Stellung des Fahrpedals bzw. eine sich ändernde Fahrpedalstellung wird entsprechend gemessen bzw. ermittelt. Die Ermittlung erfolgt über entsprechende Sensoren, mit der Signale an das Steuergerät abgegeben bzw. weitergeleitet werden. Vzw. ist das entsprechende Steuergerät auf elektrischer/elektronischer Basis realisiert und weist vzw. einen entsprechenden Mikroprozessor auf um die entsprechenden Signale der Sensoren entsprechend zu verarbeiten.

Die eingangs beschriebenen Nachteile sind nun dadurch vermieden, dass zunächst ein Bremsvorgang des Kraftfahrzeuges festgestellt wird, nämlich eine Betätigung des Bremspedals sensiert wird, dass eine Überprüfung erfolgt, ob das Fahrpedal unbetätigt ist und dass für den Fall, dass das Bremspedal betätigt und das Fahrpedal unbetätigt, die aktuelle Fahrzeuggeschwindigkeit Vₐ ermittelt und mit dem jeweiligen tiefer liegenden Grenzwert der nächsten tiefer liegenden Hochschaltschwelle HS, nämlich mit dem Null-Fahrpedal-Grenzwert NF dieser Hochschaltschwelle HS verglichen wird, und dass dann, wenn dieser Null-Fahrpedal-Grenzwert NF oder ein bestimmter Differenzwert DNF, der in Abhängigkeit dieses Null-Fahrpedal-Grenzwertes NF berechnet wird, unterschritten wird, dann der durch die damit unterschrittene Hochschaltschwelle HS definierte niedrigere Gang im Schaltgetriebe eingelegt wird.

Das der Erfindung zugrunde liegende Prinzip enthält daher im wesentlichen die folgenden Schritte: a) Es wird ein Bremsvorgang sensiert und sichergestellt, dass auch das Bremspedal betätigt und das Fahrpedal nicht betätigt wird, b) die aktuelle Fahrzeuggeschwindigkeit Vₐ wird vzw. permanent ermittelt, c) die nächst tiefer liegende Hochschaltschwelle HS wird dann - einfach ausgedrückt - "virtuell" als nunmehr tatsächliche Rückschaltschwelle RS verwendet, nämlich, d) wenn unter den oben beschriebenen Bedingungen, also bei einer Null-Fahrpedal-Stellung, die Fahrzeuggeschwindigkeit Vₐ dem zu der am nächsten tiefer liegenden Hochschaltschwelle HS entsprechenden Null-Fahrpedal-Grenzwert NF diester Hochschaftschwelle HS (oder einen hieraus errechneten bestimmten Differenzwert DNF) im wesentlichen unterschreitet, so dass dann e) der durch diese unterschrittene Hochschaltschwelle HS definierte niedrigere Gang im Schaltgetriebe eingelegt wird, also die Rückschaltung hier dann so entsprechend durchgeführt wird.

Dies hat zur Folge, dass die eingangs beschriebenen Nachteile vermieden werden, nämlich zunächst möglichst frühe Rückschaltungen während eines Bremsvorganges im Schaltgetriebe realisiert werden, was zu einer Verkürzung der Schaltzeiten und damit zu einer Erhöhung des Fahrkomforts führt. Aufgrund des Prinzips, dass "virtuell" nun eine Hochschaltschwelle für die Rückschaltung verwendet wird, entfallen die im bisher Stand der Technik ansonsten sehr komplizierten Steuerungsabläufe sowie entsprechende komplexe Adaptionsverfahren. Folglich ist der Steuerungsaufwand erheblich vereinfacht.

Im Folgenden dürfen nunmehr Einzelheiten bzw. ein Ausführungsbeispiel des erfindungsgemäßen Verfahrens anhand der Fig. 1 näher erläutert werden:
Die Fig. 1 zeigt zunächst eine Rückschaltschwelle RS 3/2 und eine entsprechende Hochschaltschwelle HS 2/3 sowie eine Rückschaltschwelle RS 4/3 und eine entsprechende Hochschaltschwelle HS 3/4. Andere Hochschaltschwellen HS bzw. Rückschaltschwellen RS sind hier zur Vereinfachung nicht dargestellt.

Gemäß dem Verfahren liegt nun definitiv ein Bremsvorgang vor, d.h. das Bremspedal ist betätigt und das Fahrpedal ist nicht betätigt. Letzteres nimmt also seine "Null-Lage" von 0% ein. Genau für diese Null-Lage des Fahrpedals ergeben sich für jede Hochschaltschwelle HS entsprechende Null-Fahrpedal-Grenzwerte NF, die im wesentlichen mit den Anfangswerten der jeweiligen Kennlinien identisch sind und hier mit einem "Kreuz" entsprechend bezeichnet sind, es ergeben sich also die entsprechenden Null-Fahrpedal-Grenzwerte NF_{3/4} der Hochschaltschwelle HS 3/4, sowie der Null-Fahrpedal-Grenzwert NF_{2/3} der Hochschaltschwelle HS 2/3 usw.

Wir das erfindungsgemäße Verfahren nun eingesetzt, also der Bremsvorgang ermittelt und wird das Fahrpedal nicht betätigt, so wird dann die aktuelle Fahrgeschwindigkeit bspw. Vₐ entsprechend ermittelt, die hier in der Fig. 1 auf der Y-Achse im Wesentlichen als kleiner "Kreis" dargestellt ist. Diese ermittelte Fahrzeuggeschwindigkeit Vₐ wird nun mit dem jeweiligen tiefer liegenden Grenzwert der nächsten tiefer liegenden Hochschaltschwelle HS, nämlich mit dem Null-Fahrpedal-Grenzwert dieser Hochschaltschwelle HS verglichen, für den zuvor beschriebenen Fall also mit dem Null-Fahrpedal-Grenzwert NF_{2/3}. Vzw. wird nun die aktuelle Fahrgeschwindigkeit Vₐ permanent ermittelt. Wird dann dieser Null-Fahrpedal-Grenzwert NF_{2/3} zu gegebener Zeit unterschritten, dann wird der durch die damit unterschritte Hochschaltschwelle HS 2/3 definierte niedrigere Gang, also für diesen Fall der zweite Gang im Schaltgetriebe eingelegt, also zu dem Zeitpunkt, wo die aktuelle Fahrzeuggeschwindigkeit Vₐ, dargestellt durch den - seitlich verschobenen - Pfeil b dann unterhalb des Null-Fahrpedal-Grenzwertes NF 2/3 fällt.

Die zuvor beschriebenen Verfahrensschritte können nun für die Dauer des Bremsvorganges entsprechend fortgeführt werden, also so lange das Bremspedal betätigt und das Fahrpedal unbetätigt ist, so dass immer die aktuelle fallende Fahrzeuggeschwindigkeit Vₐ ermittelt und die aktuell nächst tiefer liegende Hochschaltschwelle HS ermittelt wird und ggf. dann die entsprechende Rückschaltung im Schaltgetriebe durchgeführt wird. Für den in der Fig. 1 dargestellten Fall würde dies bedeuten, dass dann die jeweils aktuelle Fahrzeuggeschwindigkeit Vₐ in dem Moment, wo sie unter den Null-Fahrpedal-Grenzwert NF 2/3 gefallen ist, dann vzw. permanent mit den entsprechenden hier in der Fig. 1 nicht dargestellten Null-Fahrpedal-Grenzwert NF_{1/2} der hier nicht dargestellten Hochschaltschwelle HS 1/2 verglichen werden würde und ggf. eine weitere Rückschaltung durchgeführt werden würde, wenn die aktuelle Fahrzeuggeschwindigkeit Vₐ diesen Null-Fahrpedal-Grenzwert NF_{1/2} unterschreiten würde.

Die Schaltungen im Getriebe werden mit Hilfe eines elektronischen Steuergerätes realisiert, wobei der Vorgang zur Durchführung der jeweiligen Rückschaltungen gestoppt wird, wenn das Fahrpedal betätigt wird, der Bremsvorgang also abgebrochen worden ist.

Bei einer weiteren bevorzugten Ausführungsform kann nun vorgesehen sein, dass in Abhängigkeit des jeweiligen Null-Fahrpedal-Grenzwertes NF ein Differenzwert DNF berechnet wird, nämlich der jeweilige Null-Fahrpedal-Grenzwert NF mit einem "Offset" ΔO belegt wird. Anders ausgedrückt, der entsprechende Differenzwert DNF_{2/3} wird berechnet aus der Differenz des entsprechenden Null-Fahrpedal-Grenzwertes DNF_{2/3} und dem Offset ΔO. Dies hat den Vorteil, dass der Offset ΔO und damit auch der entsprechende Differenzwert DNF vom Bremsdruck abhängig gemacht werden kann, nämlich der Bremsdruck ermittelt wird und dann der entsprechende Offset ΔO und damit auch der Differenzwert DNF von dem ermittelten Bremsdruck entsprechend abhängig ist. Hierdurch können weitere Fahrstrategien realisiert werden.

Vzw. wird nämlich bei einem erhöhten Bremsausdruck, also bei einer sportlichen Fahrweise des Fahrers der Kraftfahrzeuges ein Offset ΔO nahe Null gewählt, so dass die jeweilige Rückschaltung früh erfolgt, nämlich wenn der jeweilige Null-Fahrpedal-Grenzwert NF im wesentlichen erreicht und/oder leicht unterschritten wird. Anders kann bei einem geringen Bremsdruck, also insbesondere bei einer komfortablen Fahrweise des Fahrers des Kraftfahrzeuges ein entsprechender Offset ΔO gewählt werden, so dass die jeweilige Rückschaltung später erfolgt, nämlich wenn der jeweilige Null-Fahrpedal-Grenzwert NF im wesentlichen stärker unterschritten wird, was hier in der Fig. 1 - gestrichelt - durch ein Offset ΔO und den dargestellten Differenzwert DNF_{2/3} angedeutet sein soll. Denkbar ist auch, dass bei einer sehr starken Bremsung ein Offset auch negativ sein kann, was hier jedoch nicht dargestellt ist.

Insbesondere Pendelschaltungen sind mit der hier dargestellten Fahrstrategie bzw. mit dem erfindungsgemäßen Verfahren absolut ausgeschlossen, da bei einem Bremsvorgang das Bremspedal betätigt wird, das Fahrzeug also langsamer wird und die Hochschaltschwelle HS in der Ebene bei einer Null-Fahrpedal-Stellung eben nicht erreicht wird. Wird aber das Fahrpedal entsprechend betätigt, steigt die Hochschaltschwelle HS d bei entsprechend starker Betätigung des Fahrpedals ohnehin, was durch die Darstellung aus der Fig. 1 hervorgeht. Zusätzlich zum spürbar agileren Fahrverhalten gemäß dem erfindungsgemäßen Verfahren wird dem Bremswunsch des Fahrers durch eine Erhöhung der Motorbremswirkung über die Wahl eines niedrigeren Ganges Folge geleistet. Vzw. kann aufgrund der ermittelten Fahrzeuggeschwindigkeit und unter Berücksichtigung der Stellung des Fahrpedals und/oder des Bremspedals die jeweilige Drehzahl des Motors berechnet werden.

Insbesondere ist letzteres auch aus Verbrauchsgründen sinnvoll, da der Motor so automatisch länger bei höherer Drehzahl in der Schubabschaltung gehalten wird, anders als bspw. bei einem herkömmlichen Ausrollen (und zwar unabhängig davon, ob gebremst wird oder nicht), wo unterhalb der Motor-/Drehzahlgrenze geschaltet wird, ab der die Schubabschaltung dann aktiv wird. Insbesondere bei der Realisierung einer sportlichen Fahrweise wird durch das erfindungsgemäße Verfahren eine wunschgemäß Gangwahl, nämlich eine frühere Bremsrückschaltung mit großer Wirkung entsprechend unterstützt, was für den sportlichen Fahrer einen erhöhten Fahrkomfort bedeutet.

Im Ergebnis sind die eingangs genannten Nachteile vermieden und entsprechende Vorteile erzielt.

### Bezugszeichenliste

- RS: Rückschaltschwelle
- HS: Hochschaltschwelle
- NF: Null-Fahrpedal-Grenzwert
- DNF: Differenzwert
- Vₐ: Fahrzeuggeschwindigkeit
- ΔO: Offset
X-Achse
Y-Achse

## Patentansprüche

1. Verfahren zur Realisierung der Schaltungen eines automatischen Schaltgetriebes eines Kraftfahrzeuges, insbesondere eines Doppelkupplungsgetriebes, wobei für jeden möglichen sequentiellen Gangwechsel in Abhängigkeit von der Fahrpedalstellung jeweils eine Hochschaltschwelle (HS) und/oder eine Rückschaltschwelle (RS) definiert ist, nämlich der für die jeweilige Hoch- bzw. Rückschaltung gültige Grenzwert als entsprechender Fahrzeuggeschwindigkeitswert in einem Steuergerät abgespeichert ist, wobei die während der Fahrt des Kraftfahrzeuges sich ändernde Fahrzeuggeschwindigkeit Vₐ und die sich ändernde Fahrpedalstellung gemessen werden und wobei bei einer Bremsphase des Kraftfahrzeuges eine Rückschaltung, insbesondere eine Bremsrückschaltung realisiert wird, **dadurch gekennzeichnet, dass** zunächst ein Bremsvorgang des Kraftfahrzeuges festgestellt wird, nämlich eine Betätigung des Bremspedales sensiert wird, dass eine Überprüfung erfolgt, ob das Fahrpedal unbetätigt ist und dass für den Fall dass das Bremspedal betätigt und dass Fahrpedal unbetätigt ist die aktuelle Fahrzeuggeschwindigkeit (Vₐ) ermittelt und mit dem jeweiligen tiefer liegenden Grenzwert der nächsten tiefer liegenden Hochschaltschwelle (HS), nämlich mit dem Null-Fahrpedal-Grenzwert (NF) dieser Hochschaltschwelle (HS) verglichen wird, und dass dann, wenn dieser Null-Fahrpedal-Grenzwert (NF) oder ein bestimmter Differenzwert (DNF), der in Abhängigkeit dieses Null-Fahrpedal-Grenzwertes (NF) berechnet wird, unterschritten wird, dann der durch die damit unterschrittene Hochschaltschwelle (HS) definierte niedrigere Gang im Schaltgetriebe eingelegt wird.

2. Verfahren nach Anspruch 1, **dadurch gekennzeichnet, dass** die Verfahrensschritte für die Dauer des Bremsvorganges entsprechend fortgeführt werden solange bis das Bremspedal betätigt und das Fahrpedal unbetätigt sind, so dass immer die aktuelle fallende Fahrzeuggeschwindigkeit (Vₐ) ermittelt und die aktuell nächst tieferliegende Hochschaltschwelle (HS) ermittelt wird und gegebenenfalls die entsprechende Rückschaltung im Schaltgetriebe durchgeführt wird.

3. Verfahren nach Anspruch 1 oder 2, **dadurch gekennzeichnet, dass** die Schaltungen im Getriebe mit Hilfe eines elektronischen Steuergerätes realisiert werden.

4. Verfahren nach einem der vorstehenden Ansprüche, **dadurch gekennzeichnet, dass** der Vorgang zur Durchführung der jeweiligen Rückschaltungen gestoppt wird, wenn das Fahrpedal betätigt wird.

5. Verfahren nach einem der vorstehenden Ansprüche, **dadurch gekennzeichnet, dass** in Abhängigkeit des jeweiligen Null-Fahrpedal-Grenzwertes (NF) ein Differenzwert (DNF) berechnet wird, nämlich der jeweilige Null-Fahrpedal-Grenzwert mit einem Offset (ΔO) belegt wird.

6. Verfahren nach einem der vorstehenden Ansprüche, **dadurch gekennzeichnet, dass** der Bremsdruck ermittelt wird und der Offset (ΔO) und damit auch der Differenzwert (DNF) von dem ermittelten Bremsdruck abhängig ist.

7. Verfahren nach einem der vorstehenden Ansprüche, **dadurch gekennzeichnet, dass** bei einem erhöhten Bremsdruck, also bei einer sportlichen Fahrweise des Fahrers des Kraftfahrzeuges ein Offset (ΔO) nahe Null gewählt wird, so dass die jeweilige Rückschaltung früh erfolgt, nämlich wenn der jeweilige Null-Fahrpedal-Grenzwert (NF) im wesentlichen erreicht und/oder leicht unterschritten wird.

8. Verfahren nach einem der vorstehenden Ansprüche, **dadurch gekennzeichnet, dass** bei einem geringen Bremsdruck, also bei einer komfortablen Fahrweise des Fahrers des Kraftfahrzeuges ein entsprechender Offset (ΔO) gewählt wird, so dass die jeweilige Rückschaltung später erfolgt, nämlich wenn der jeweilige Null-Fahrpedal-Grenzwert (NF) im wesentlichen stärker unterschritten wird.

9. Verfahren nach einem der vorstehenden Ansprüche, **dadurch gekennzeichnet, dass** aufgrund der ermittelten Fahrzeuggeschwindigkeit und der Stellung des Fahrpedals und/oder des Bremspedals die jeweilige Drehzahl des Motors berechnet wird.

## Claims

1. Method for implementing the shifts of an automatic shift transmission of a motor vehicle, in particular of a dual-clutch transmission, with in each case one upshift threshold (HS) and/or one downshift threshold (RS) for each possible sequential gear change being defined as a function of the throttle pedal position, specifically the limit value applicable to the respective upshift or downshift is stored as a corresponding vehicle speed value in a control unit, with the vehicle speed Vₐ which varies as the motor vehicle is travelling and the varying throttle pedal position being measured, and with a downshift, in particular a braking downshift, being implemented in a braking phase of the motor vehicle, **characterized in that** firstly a braking process of the motor vehicle is detected, specifically an actuation of the brake pedal is sensed, **in that** it is checked whether the throttle pedal is not actuated and **in that**, if the brake pedal is actuated and the throttle pedal is not actuated, the present vehicle speed (Vₐ) is determined and compared with the respective lower limit value of the next lower upshift threshold (HS), specifically with the zero throttle pedal limit value (NF) of said upshift threshold (HS), and **in that**, when said zero throttle pedal limit value (NF) or a certain differential value (DNF) which is calculated as a function of said zero throttle pedal limit value (NF) is undershot, then the lower gear defined by the upshift threshold (HS) thereby undershot is engaged in the shift transmission.

2. Method according to Claim 1, **characterized in that** the method steps are continued correspondingly for the duration of the braking process until the brake pedal is actuated and the throttle pedal is not actuated, such that always the present falling vehicle speed (Vₐ) is determined and the presently next lower upshift threshold (HS) is determined and, if appropriate, the corresponding downshift is carried out in the shift transmission.

3. Method according to Claim 1 or 2, **characterized in that** the shifts are implemented in the transmission by means of an electronic control unit.

4. Method according to one of the preceding claims, **characterized in that** the process for carrying out the respective downshifts is stopped if the throttle pedal is actuated.

5. Method according to one of the preceding claims, **characterized in that** a differential value (DNF) is calculated as a function of the respective zero throttle pedal limit value (NF), specifically the respective zero throttle pedal limit value is adjusted by an offset (ΔO).

6. Method according to one of the preceding claims, **characterized in that** the brake pressure is determined and the offset (ΔO) and therefore also the differential value (DNF) is dependent on the determined brake pressure.

7. Method according to one of the preceding claims, **characterized in that**, in the case of a high brake pressure, that is to say in the case of a sporty driving style of the driver of the motor vehicle, an offset (ΔO) of close to zero is selected such that the respective downshift takes place early, specifically when the respective zero throttle pedal limit value (NF) is substantially reached and/or undershot slightly.

8. Method according to one of the preceding claims, **characterized in that**, in the case of a low brake pressure, that is to say in the case of a comfortable driving style of the driver of the motor vehicle, a corresponding offset (ΔO) is selected such that the respective downshift takes place later, specifically when the respective zero throttle pedal limit value (NF) is undershot to a significantly greater extent.

9. Method according to one of the preceding claims, **characterized in that** the respective rotational speed of the engine is calculated on the basis of the determined vehicle speed and the position of the throttle pedal and/or of the brake pedal.

## Revendications

1. Procédé pour réaliser les changements de vitesse d'une boîte de vitesses automatique d'un véhicule automobile, notamment d'une boîte de vitesses à double embrayage, dans lequel, pour chaque changement de vitesse séquentiel possible, on définit en fonction de la position de la pédale d'accélérateur à chaque fois un seuil de passage à la vitesse supérieure (HS) et/ou un seuil de rétrogradage (RS), c'est-à-dire que la valeur limite valable pour le passage respectif à la vitesse supérieure et inférieure est stockée sous forme de valeur de vitesse du véhicule correspondante dans un appareil de commande, la vitesse du véhicule Vₐ variant pendant la conduite du véhicule automobile et la position de la pédale d'accélérateur qui varie étant mesurées et dans le cas d'une phase de freinage du véhicule automobile, un rétrogradage, notamment un rétrogradage de freinage, étant réalisé, **caractérisé en ce que** l'on constate d'abord une opération de freinage du véhicule automobile, c'est-à-dire qu'on détecte un actionnement de la pédale de frein, **en ce qu'**il s'ensuit une vérification que la pédale d'accélérateur n'est pas actionnée et que dans le cas où la pédale de frein est actionnée et que la pédale d'accélérateur n'est pas actionnée, la vitesse actuelle du véhicule (Vₐ) est détectée et est comparée avec la valeur limite suivante la plus basse du seuil de passage à la vitesse supérieure (HS) suivant le plus bas, à savoir avec la valeur limite de pédale d'accélération nulle (NF) de ce seuil de passage à la vitesse supérieure (HS), et qu'ensuite, si cette valeur limite de pédale d'accélérateur nulle (NF) ou une valeur de différence déterminée (DNF), qui est calculée en fonction de cette valeur limite de pédale d'accélération nulle (NF), n'est pas atteinte, on enclenche alors la vitesse inférieure dans la boîte de vitesses, définie par le seuil de passage à la vitesse supérieure (HS) qui n'a pas été atteint.

2. Procédé selon la revendication 1, **caractérisé en ce que** les étapes de procédé pour la durée de l'opération de freinage sont poursuivies de manière correspondante tant que la pédale de frein est actionnée et que la pédale d'accélérateur n'est pas actionnée, de sorte que la vitesse actuelle de décélération du véhicule (Vₐ) soit toujours détectée et que le seuil de passage à la vitesse supérieure actuel suivant le plus bas (HS) soit détecté et éventuellement que le rétrogradage correspondant soit effectué dans la boîte de vitesses.

3. Procédé selon la revendication 1 ou 2, **caractérisé en ce que** les changements de vitesse dans la boîte de vitesses sont réalisés à l'aide d'un appareil de commande électronique.

4. Procédé selon l'une quelconque des revendications précédentes, **caractérisé en ce que** l'opération pour mettre en oeuvre les rétrogradages respectifs est arrêtée dès que la pédale d'accélérateur est actionnée.

5. Procédé selon l'une quelconque des revendications précédentes, **caractérisé en ce que** l'on calcule en fonction de la valeur limite de la pédale d'accélérateur nulle respective (NF) une valeur de différence (DNF) c'est-à-dire que l'on affecte à la valeur limite de la pédale d'accélérateur nulle respective un décalage (ΔO).

6. Procédé selon l'une quelconque des revendications précédentes, **caractérisé en ce que** la pression de freinage est détectée et le décalage (ΔO), et donc également la valeur de différence (DNF), est fonction de la pression de freinage détectée.

7. Procédé selon l'une quelconque des revendications précédentes, **caractérisé en ce que** dans le cas d'une pression de freinage accrue, c'est-à-dire dans un mode de conduite sportif du conducteur du véhicule automobile, un décalage (ΔO) proche de zéro est sélectionné, de sorte que le rétrogradage respectif s'effectue de manière précoce, c'est-à-dire lorsque la valeur limite de la pédale d'accélérateur nulle respective (NF) est essentiellement atteinte et/ou juste en dessous de celle-ci.

8. Procédé selon l'une quelconque des revendications précédentes, **caractérisé en ce que** dans le cas d'une faible pression de freinage, c'est-à-dire dans un mode de conduite confortable du conducteur du véhicule automobile, un décalage (ΔO) correspondant est sélectionné, de sorte que le rétrogradage respectif s'effectue de manière retardée, c'est-à-dire nettement plus en dessous de la valeur limite de la pédale d'accélérateur nulle respective (NF).

9. Procédé selon l'une quelconque des revendications précédentes, **caractérisé en ce que** sur la base de la vitesse du véhicule détectée et de la position de la pédale d'accélérateur et/ou de la pédale de frein, on calcule le régime correspondant du moteur.
